# EUROPÄISCHE PATENTSCHRIFT

(11) **EP 3 281 809 B1**
(45) Veröffentlichungstag und Bekanntmachung des Hinweises auf die Patenterteilung: **16.09.2020**
(21) Anmeldenummer: 17174465.9
(22) Anmeldetag: 06.06.2017
(51) Int. Cl.: B60C 19/12

(54) **FAHRZEUGLUFTREIFEN MIT SELBSTDICHTENDEN EIGENSCHAFTEN**
PNEUMATIC VEHICLE TYRE WITH SELF-SEALING PROPERTIES
PNEU DE VÉHICULE PRÉSENTANT DES CARACTÉRISTIQUES D'AUTO-ÉTANCHÉITÉ

(30) Priorität: 09.08.2016 DE 102016214757
(43) Veröffentlichungstag der Anmeldung: 14.02.2018
(73) Patentinhaber: Continental Reifen Deutschland GmbH, 30165 Hannover (DE)
(72) Erfinder: Tyburski, Andreas, 31241 Ilsede (DE); Karacete, Kartal, 12057 Berlin (DE); Bergmann, Sascha, 34308 Bad Emstal (DE)
(74) Vertreter: Finger, Karsten

(56) Entgegenhaltungen:
- WO-A1-2017/059975
- DE-A1-102012 107 606
- DE-U1-202015 006 945
- US-A1- 2013 146 195

## Beschreibung

Die Erfindung betrifft einen Fahrzeugluftreifen mit selbstdichtenden Eigenschaften, umfassend einen bevorzugt profilierten Laufstreifen, einen mehrlagigen Gürtelverband mit Gürtelkanten aufweisenden Gürtellagen, eine Karkasse, welche in dem Bereich eines Wulstes um einen Wulstkern und ein Wulstkernprofil zu einem Karkasshochschlag herumgeführt ist und Seitenwände sowie eine Innenschicht und eine radial innerhalb der Innenschicht angeordnete Dichtmittellage, wobei die Innenschicht konturiert ausgeführt ist und zumindest in einem Teilbereich der Dichtmittellage einen dünnen Bereich mit geringerer Stärke als in außerhalb der Dichtmittellage liegenden dickeren Bereichen aufweist.

Die Begriffe Fahrzeugluftreifen mit selbstdichtenden Eigenschaften, Fahrzeugluftreifen, Fahrzeugreifen sowie Reifen werden in dieser Schrift austauschbar verwendet, wenn nicht anderweitig angedeutet.

Derartige selbstdichtend ausgestaltete Fahrzeugluftreifen sind bekannt. Hierbei werden Reifen-Standardkonstruktionen nachträglich mit einer Dichtmittellage versehen. Das Dichtmittel ist eine selbsthaftende, viskose Dichtmasse, welche von radial innen im Projektionsbereich des Gürtelverbands auf die in radialer Richtung innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen. Das Dichtmittel zeichnet sich durch Luftdichtigkeit, starke Klebrigkeit und ausgewogenes Fließverhalten aus.

Ständiges Ziel bei der Reifenherstellung ist es Materialkosten einzusparen, ohne die Eigenschaften des Reifens nachteilig zu verändern. Daher wird im Stand der Technik vorgeschlagen, Reifenrohlinge speziell zu fertigen um später daraus einen Fahrzeugluftreifen mit selbstdichtenden Eigenschaften herzustellen, dies kann zu Problemen mit der Feuchtigkeitsaufnahme beim Reifenrohling führen.

Wenn die Halbzeuge für die Reifenproduktion vorgefertigt sind, beginnt der Reifenaufbau. In einer Reifenaufbaumaschine werden alle Einzelteile zu einer Einheit zusammengesetzt. Dieser noch unvulkanisierte Reifen wird auch grüner Reifen oder Reifenrohling genannt. Dieser Reifenrohling und die darin enthalten Festigkeitsträger aufweisenden Lagen neigen zur Feuchtigkeitsaufnahme. Textile Festigkeitsträger nehmen im Stadium des Reifenrohlings Feuchtigkeit auf, welche bei dem nachfolgenden Produktionsschritt dort verbleiben kann und sich negativ auswirkt.

Im nachfolgenden Produktionsschritt wird aus den bisher plastischen mit Schwefel vernetzbaren Kautschukmischungen durch den Vulkanisationsprozess elastischer Gummi und die einzelnen Bauteile des Reifenrohlings vulkanisieren miteinander. Hierzu wird der Reifenrohling unter einem bestimmten Druck, in einer bestimmten Zeit bei einer bestimmten Temperatur in einer Heizpresse "gebacken". Gleichzeitig erhält der Reifenrohling sein Profil sowie seine Flankenbeschriftungen. Damit ist die eigentliche Produktion eines Reifens abgeschlossen. Nach diesem Produktionsschritt wird die Dichtmittellage zur Erzeugung eines Fahrzeugluftreifens mit Selbstdichtendereigenschaften eingebracht. Insbesondere aus Kostengründen wurde im Bereich der später einzubringen Dichtmittellage Recycling-Material eingesetzt oder es wurde auf eine Innenschicht in diesem Bereich verzichtet. Beides kann zur Feuchtigkeitsaufnahme im Reifenrohling führen, welche wiederum zu Problemen in späteren Produktionsschritt führt. Erst wenn der Vulkanisationsprozess abgeschlossen ist, ist der Reifen vor Feuchtigkeitsaufnahme geschützt.

Ein Fahrzeugluftreifen eingangs genannter Art ist beispielsweise aus der DE 10 2012 107 606 A1 bekannt. Diese Druckschrift betrifft einen selbstdichtenden Fahrzeugluftreifen mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage in etwa die Breite des Gürtelpakets aufweist und in etwa in dessen Projektion angeordnet ist, wobei die Innenschicht dreiteilig ausgeführt ist, wobei sie aus einem mittleren Teil und zwei seitlich angeordneten Teilen ausgeführt ist und der mittlere Teil der Innenschicht, der in etwa radial oberhalb der Dichtmittellage Reifenumfang umlaufend angeordnet ist, wenigstens eine wiederaufgearbeitete Kautschukmischung enthält.

Der Einsatz einer wiederaufgearbeiteten Kautschukmischung führt zu Problemen, da Fremdkörper und/oder Verunreinigungen in dem aufgearbeiteten Material enthalten sein können. Diese Fremdkörper und/oder Verunreinigungen können zur Beeinträchtigung des Schutzes vor Feuchtigkeitsaufnahme und zur Beeinträchtigung der Luftdichtigkeit, beispielsweise durch größere Partikel führen. Weiterhin können die Fremdkörper und/oder Verunreinigungen zur Beschädigung der Reifenbaumaschine führen, beispielsweise durch Metallpartikel. Auch kann der Einsatz einer wiederaufbereiteten Kautschukmischung, auch anteilig, zu Problemen führen, da die Mengenverhältnisse der enthaltenen Substanzen mit großer Variation verbunden sein können. Hieraus resultieren Materialeigenschaften mit größerer Variation. Auch können bereits vulkanisierte Bestandteile aus einer wiederaufbereiteten Kautschukmischung zu Problemen in einer mit Schwefel vernetzbaren Gummimischung führen.

Die DE 10 2012 108 343 A1 betrifft einen selbstdichtenden Fahrzeugluftreifen mit einem Gürtelpaket, einem radial oberhalb des Gürtelpakets angeordneten Laufstreifen und einer radial innen angeordneten luftdicht ausgeführten Innenschicht, wobei die Selbstdichtung des Fahrzeugluftreifens durch eine nach der Vulkanisation des Fahrzeugluftreifens nachträglich radial innen aufgebrachten Dichtmittellage erhalten ist, wobei die Dichtmittellage in etwa die Breite des Gürtelpakets aufweist und in etwa in dessen Projektion angeordnet ist, dadurch gekennzeichnet, dass die Innenschicht zweiteilig ausgeführt ist, so dass in etwa radial oberhalb der Dichtmittellage um den Reifenumfang umlaufend keine Innenschicht angeordnet ist.

Reifen ohne luftdichte Innenschicht oder bereichsweise ohne luftdichte Innenschicht ausgeführt, weisen erhebliche Nachteile auf, da keine Schicht mehr vorhanden ist die den unvulkanisierten Reifenrohling vor Feuchtigkeitsaufnahme schützen kann. Die Lagerungszeit sowie die Verarbeitungszeit ist für den unvulkanisierten Reifenrohling ohne schützende Schicht kritisch, da die während dieser Zeit aufgenommene Feuchtigkeit schwer kalkulierbar ist, jedoch Einfluss auf die weitere Verarbeitung des Reifenrohlings haben kann.

Ein Fahrzeugluftreifen, insbesondere ein Gummi-Luftreifen weist herkömmlicherweise eine Kreisringform auf mit einem Hohlraum, der typischerweise mit Hilfe einer Felge, worauf der Reifen montiert wird, verschlossen wird. Die Innenfläche des Fahrzeugluftreifens, das heißt eine innere Oberfläche des besagten Hohlraums, weist bei einem Teil der aus dem Stand der Technik bekannten Fahrzeugluftreifen eine luftdichte Innenschicht gleicher Stärke auf, andere Fahrzeugluftreifen aus dem Stand der Technik werden ohne luftdichte Innenschicht gefertigt.

Beide Varianten weisen Nachteile auf.

Den gesamten Reifeninnenraum mit einer luftdichten Innenschicht in abdichtender Stärke auszustatten trägt deutlich zur Masse des Fahrzeugluftreifens bei, den Fahrzeugluftreifen ohne luftdichte Innenschicht zu fertigen führt zu Problemen im Hinblick auf die Feuchtigkeitsaufnahme des Reifenmaterials. Unvulkanisierte Reifenrohlinge vor der Wärmebehandlung -grüne Reifen- können unerwünscht Feuchtigkeit aufnehmen, diese kann wiederum durch hygroskopische Materialien, aus denen beispielsweise Festigkeitsträger hergestellt sein können, aufgenommen werden und können zu Veränderung der Eigenschaften führen.

Die luftdichte Innenschicht, sofern vorhanden, ist typischerweise eine Gummischicht, die aus einer Elastomer-Zusammensetzung hergestellt ist, die dazu ausgebildet ist, das Eindringen von Feuchtigkeit und Luft aus dem vorgenannten Hohlraum, der zur inneren Luftkammer des Reifens wird, in den Reifen zu verhindern oder zu verlangsamen. Diese luftdichte Innenschicht ist so gebildet, dass sie die Durchlässigkeit von Luft, die verwendet wird, um den Reifen aufzublasen, verlangsamt oder minimiert und dazu beiträgt, den Luftdruck im Reifen aufrechtzuerhalten. Solche Kautschuk-Mischungen beinhalten beispielsweise Polybutadien-Kautschuk (BR-Kautschuk), Butyl-Kautschuk und/oder Halobutyl-Kautschuk.

Weitere Dichtmittellagen aufweisende Fahrzeugluftreifen sind beispielsweise aus der DE 20 2015 006 945 U1 oder der WO 2017/059975 A1 bekannt.

Der Erfindung liegt daher die Aufgabe zu Grunde, einen effektiven Aufbau eines Fahrzeugluftreifen mit selbstdichtenden Eigenschaften vorzuschlagen, welcher die Aufnahme von Feuchtigkeit in den Reifenrohling verhindert oder zumindest verringert.

Gelöst wird diese Aufgabe erfindungsgemäß dadurch, dass
die konturierte Innenschicht einteilig ausgebildet ist und sich im gesamten Innenraum des Fahrzeugluftreifens erstreckt, wobei die dickeren Bereiche der Innenschicht, im Reifenquerschnitt betrachtet, axial außerhalb der Gürtelkanten von der Dichtmittellage überlappt sind.

Der erfindungsgemäße Fahrzeugluftreifen mit selbstdichtenden Eigenschaften weist eine in ihrer Kontur variierte Innenschicht auf. In dieser Schrift bezeichnet "variieren" das voneinander Abweichen in verschiedenen Abstufungen. Dies bedeutet, dass die Innenschicht in ihren Dicken unterschiedlich ausgeführt ist.

Hierdurch wird bereits währen der Herstellung des Fahrzeugluftreifen-Rohlings der gesamte Innenraum des Fahrzeugluftreifens vor der Aufnahme von Feuchtigkeit geschützt. In diesem Stadium des Produktionsprozesses muss der Fahrzeugluftreifen noch keine Luftdichtigkeit aufweisen.

Es wird an Masse und Kosten für Innenschichtmaterial gespart, da die Innenschicht nur in dem Bereich eine zur Erzeugung der Luftdichtigkeit notwendige Stärke aufweist, in dem im fertigen Fahrzeugluftreifen mit selbstdichtenden Eigenschaften keine Dichtmittellage vorgesehen ist.

Weiterhin ist erfindungsgemäß vorgesehen, dass die Innenschicht in axialer Richtung innen zumindest innerhalb der Erstreckung des Wulstes sowie der Seitenwand in radialer Richtung einen Bereich einer dicken Innenschicht aufweist. In diesem Bereich wird die Innenschicht neben dem Schutz vor der Aufnahme von Feuchtigkeit im fertigen Fahrzeugluftreifen mit selbstdichtenden Eigenschaften weitestgehend unbedeckt von der Dichtmittellage bleiben.

Weiterhin ist erfindungsgemäß vorgesehen, dass die Innenschicht zumindest im Erstreckungsbereich der dicken Innenschicht luftdicht ausgeführt ist. Da dieser Bereich im fertigen Fahrzeugluftreifen mit selbstdichtenden Eigenschaften weitestgehend unbedeckt von der Dichtmittellage bleibt, muss hier die Innenschicht neben dem Schutz vor der Feuchtigkeitsaufnahme auch im fertigen Fahrzeugluftreifen mit Selbstdichtenden Eigenschaften luftundurchlässig sein.

Weiterhin ist erfindungsgemäß vorgesehen, dass nach der Vulkanisation des Fahrzeugluftreifens in radialer Richtung innen die Dichtmittellage aufgebracht wird, wobei die Dichtmittellage in etwa die Breite des Gürtelverbands aufweist und in etwa in dessen Projektion angeordnet ist. Somit wird die Dichtmittellage vorwiegend in dem Bereich des Reifeninnenraums aufgebracht, wo während des Herstellungsprozesses die Innenschicht lediglich vor der Aufnahme von Feuchtigkeit, insbesondere beim Reifenrohling schützte. Im fertigen Fahrzeugluftreifen mit Selbstdichtendereigenschaften wird durch die Dichtmittellage die Selbstdichtendeeigenschaft im Fahrzeugluftreifen erzeugt.

Weiterhin ist erfindungsgemäß vorgesehen, dass das die im Reifen in axialer Richtung gegenüberliegend angeordneten und radial umlaufenden dicken Innenschichten nur im in radialer Richtung oberen Bereich eine Überlappung mit der Dichtmittellage aufweisen. Somit ist sicher gewährleistet, dass der Fahrzeugluftreifen mit selbstdichtenden Eigenschaften im Fahrbetrieb luftdicht ist.

Weiterhin ist erfindungsgemäß vorgesehen, dass die Überlappung zwischen der dicken Innenschicht und der Dichtmittellage ein Maß von bis zu 60 mm, bevorzugt zwischen 2 und 30 mm, besonders bevorzugt zwischen 7 und 13 mm aufweist. Hierdurch wird sichergestellt, dass auch wenn der Fahrzeugluftreifen mit selbstdichtenden Eigenschaften im Fahrbetrieb gedehnt und/oder gestaucht wird die Luftdichtigkeit erhalten bleibt.

Weiterhin ist erfindungsgemäß vorgesehen, dass der Bereich der dicken Innenschicht in seinen physikalischen und/oder chemischen Eigenschaften von dem Bereich der dünnen Innenschicht der Innenschicht abweicht. Hierdurch wird der Einsatz verschiedener Kautschuk-Zusammensetzungen für die drei Bereiche der konturierten Innenschicht ermöglicht.

Weiterhin ist erfindungsgemäß vorgesehen, dass alleinig der Bereich der dicken Innenschicht der Innenschicht von einer Kautschuk-Zusammensetzung gebildet ist, welche mindestens Polybutadien-Kautschuk (BR-Kautschuk), Butyl-Kautschuk und/oder Halobutyl-Kautschuk aufweist. Hierdurch werden kostenintensive Material nur in dem Bereich der Reifenkonstruktion eingesetzt, wo die speziellen luftdichtenden Eigenschaften dieser Materialien gefragt sind.

Weiterhin ist erfindungsgemäß vorgesehen, dass alleinig der Bereich der dünnen Innenschicht der Innenschicht von einer Folie gebildet ist. Eine Folie ist kostengünstig in der Herstellung und schützt den Reifenrohling ebenfalls vor Feuchtigkeit. Im fertigen Fahrzeugluftreifen mit selbstdichtenden Eigenschaften wird diese Folie vorteilhaft von der Dichtmittellage überdeckt.

Weiterhin ist erfindungsgemäß vorgesehen, dass der Bereich der dünnen Innenschicht eine geringere Dichte aufweist als der Bereich der dicken Innenschicht der Innenschicht. Hierdurch wird die Masse des fertigen Fahrzeugluftreifens mit selbstdichtenden Eigenschaften geringer. Auch eine Innenschicht mit geringer Dichte schützt den Reifenrohling vor der Aufnahme von Feuchtigkeit. Im fertigen Fahrzeugluftreifen mit selbstdichtenden Eigenschaften wird dieser Bereich geringer Dichte vorteilhaft von der Dichtmittellage überdeckt.

Weiterhin ist erfindungsgemäß vorgesehen, dass die beiden Kanten des Bereichs der dünnen Innenschicht der Innenschicht mit den seitlichen Teilen des Bereichs der dicken Innenschicht der Innenschicht überlappend angeordnet sind, wobei die Überdeckung des Bereichs der dünnen Innenschicht der Innenschicht mit den seitlich angeordneten Teilen des Bereichs der dicken Innenschicht radial oberhalb oder unterhalb erfolgt. Hierdurch ist erreicht, dass die Übergangsbereiche zwischen den verschieden ausgestalteten Bereichen der konturierten Innenschicht im Fahrbetrieb luftdicht sind.

Beispielsweise ist die luftdicht ausgeführte Innenschicht aus Poly(1,4-butadien), dem sogenannten Polybutadien-Kautschuk (Kurzzeichen BR) hergestellt. Dieser BR-Kautschuk ist in der Anschaffung und durch seine Verarbeitung besonders teuer. Indem nun die luftdichte Innenschicht nicht mehr durchgängig aus BR-Kautschuk gefertigt ist, sondern es wenigstens einen Bereich gibt, in dem auf die luftdichte Innenschicht verzichtet ist, ist der Reifen durch diese Materialeinsparung in seiner Herstellung erheblich im Preis vergünstigt.

Die luftdichte Innenschicht, basierend auf Kautschuk-Zusammensetzungen, stellt die teuerste Komponente im Reifenaufbau dar. Sie trägt ebenfalls zur Masse des Reifens bei, da relativ dicke luftdichte Innenschichten im Allgemeinen notwendig sind, um den erwünschten Grad an Luftundurchlässigkeit zu erreichen.

Eine hohe Dichtigkeit oder geringe Luft-/Gasdurchlässigkeit des Reifenmaterials ist erforderlich, die üblicherweise durch eine luftdichte Innenschicht aus Butyl-/ Halobutyl-Kautschuk gewährleistet wird. Es ist Stand der Technik, dass die luftdichte Innenschicht beispielsweise aus (Halo-)Butyl-Kautschuk hergestellt ist, der vergleichsweise teuer ist. An der Innenseite des Reifens ist an der inneren Lage die luftdichte Innenschicht aus im Allgemeinen luftundurchlässigem Butyl-Kautschuk beziehungsweise Halobutyl-Kautschuk (Brom- oder Chlorbutyl-Kautschuk) anvulkanisiert.

Die Kautschuk-Zusammensetzung für eine luftdichte Innenschicht kann mindestens ein Elastomer, ausgewählt aus der aus Butyl-Kautschuk, chloriertem Butyl-Kautschuk, bromiertem Butyl-Kautschuk, synthetischem Polyisopren, Naturkautschuk, StyrolButadien-Kautschuk, Polybutadien, Copolymer von Isobutylen und Paramethylstyrol, und bromiertem Copolymer von Isobutylen und Paramethylstyrol bestehenden Gruppe aufweisen.

Zusätzlich zu den vorgenannten Elastomeren, kann die Kautschuk-Zusammensetzung für eine luftdichte Innenschicht auch andere Inhaltsstoffe enthalten, die häufig in Kautschuk-Vulkanisaten verwendet werden, beispielsweise klebrig machende Harze, Verarbeitungshilfsmittel, Industrieruß, Kieselsäure, Talk, Ton, Glimmer, Antioxidantien, Antiozonmittel, Stearinsäure, Aktivatoren, Wachse und Öle, je nach Bedarf.

Die Vulkanisation der Verbindung zur Verwendung als luftdichte Innenschicht wird in Gegenwart eines Schwefelvulkanisationsmittels vollzogen. Beispiele für geeignete Schwefelvulkanisationsmittel beinhalten elementaren Schwefel (freien Schwefel) oder schwefelspendende Vulkanisationshilfsmittel, beispielsweise ein Amindisulfid, Polymerdisulfid oder Schwefelolefinaddukte.

Das Mischen der Kautschuk-Zusammensetzung zur Herstellung der luftdichten Innenschicht kann durch in der Kautschukmischtechnik bekannte Verfahren vollzogen werden.

Die Begriffe Kautschuk, Gummi, Elastomer-Material, elastomeres Material und Elastomer werden austauschbar verwendet, wenn nicht anderweitig angedeutet, die Begriffe aushärten und vulkanisieren können austauschbar verwendet werden, wenn nicht anderweitig angedeutet, und die Begriffe Kautschukmischung, Kautschuk-Zusammensetzung, Elastomer-Zusammensetzung, Elastomer-Mischung und GummiMischung können austauschbar verwendet werden, wenn nicht anderweitig angedeutet.

Die luftdichte Innenschicht, kann somit beispielsweise Polybutadien-Kautschuk (BR-Kautschuk), Butyl-Kautschuk und/oder Halobutyl-Kautschuk aufweisen.

Weitere Merkmale, Vorteile und Einzelheiten der Erfindung werden anhand der Zeichnungen, die schematische Ausführungsbeispiele darstellen, näher erläutert.

Es zeigen die:
- Fig. 1: einen Teilquerschnitt durch den Kopfbereich eines ersten Ausführungsbeispiels eines Fahrzeugluftreifens mit selbstdichtenden Eigenschaften mit einer konturierten Innenschicht,
- Fig. 2: einen Querschnitt durch ein zweites Ausführungsbeispiel eines Fahrzeugluftreifens mit selbstdichtenden Eigenschaften mit einer konturierten Innenschicht und
- Fig. 3: einen Querschnitt durch ein drittes Ausführungsbeispiel eines Fahrzeugluftreifens mit selbstdichtenden Eigenschaften mit einer konturierten Innenschicht.

In den nachfolgenden Figurenbeschreibungen beziehen sich Begriffe wie oben, unten, vorne, hinten, links, rechts und dergleichen ausschließlich auf die in den jeweiligen Figuren gewählte beispielhafte Darstellung und Position der Vorrichtung und anderer Elemente. Diese Begriffe sind nicht einschränkend zu verstehen, das heißt durch verschiedene Positionen und/oder spiegelsymmetrische Auslegung oder dergleichen können sich diese Bezüge ändern.

Gleiche Elemente erhalten in den Figuren sowie in der nachfolgenden Beschreibung gleiche Bezugszeichen.

Zur Verdeutlichung der Lage der einzelnen beschriebenen Elemente in den nachfolgenden Figuren wird ein linkshändiges kartesisches Koordinatensystem zu Grunde gelegt und jeweils benachbart zu den Figuren abgebildet. Bei diesem Koordinatensystem verlaufen die Koordinatenlinien einer Dimension parallel zueinander und weisen einen konstanten Abstand zueinander auf. Die x-Achse oder Abszisse des kartesischen Koordinatensystems stellt die axiale Richtung AR dar. Die y-Achse oder Ordinate des kartesischen Koordinatensystems stellt die radiale Richtung RR dar. Die z-Achse oder Applikante des kartesischen Koordinatensystems verläuft bei diesem linkshändigen Koordinatensystem in der Abbildung in den Raum hinein und stellt die Umfangsrichtung UR beziehungsweise Drehrichtung eines Reifens dar. Der Reifen rotiert im Betrieb um eine Achse, welche parallel zu der Axialen Richtung AR orientiert ist. Die Rotation des Reifens kann in den Raum hinein oder entgegengesetzt erfolgen. Die Rotation des Reifens erfolgt um eine im Zentrum des Reifens angeordnete, beim unbelasteten Reifen am Punkt des halben Durchmessers angeordnete Achse. Weiterhin weist der Reifen eine Mittelinie M auf, welche den Querschnitt halbiert und somit einen Teilquerschnitt eines um die Mittelinie M beziehungsweise Spiegelachse M spiegelsymmetrischen Rotationskörpers ausbildet. Im Bereich der Mittellinie M weist der Reifen bevorzugt den größten Umfang auf, sie bildet dann den Zenith des Reifens. Die Form des Reifens kann auch als unvollständiger Torus aufgefasst werden, wobei er in radialer Richtung RR zur Felge hin eine umlaufende Aussparung im Bereich der nicht dargestellten Felge aufweist. Reifen und Felge bilden zusammen ein Rad aus.

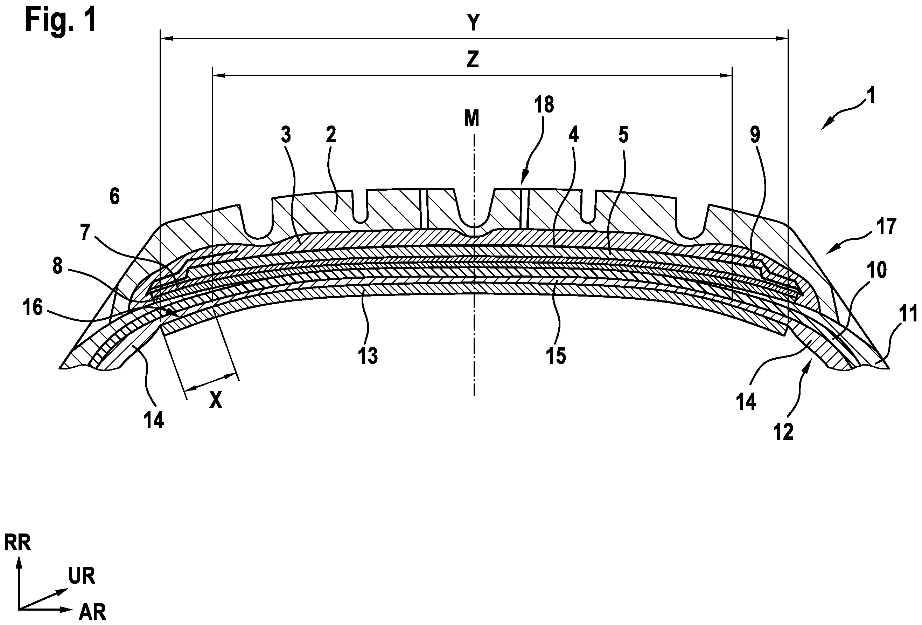

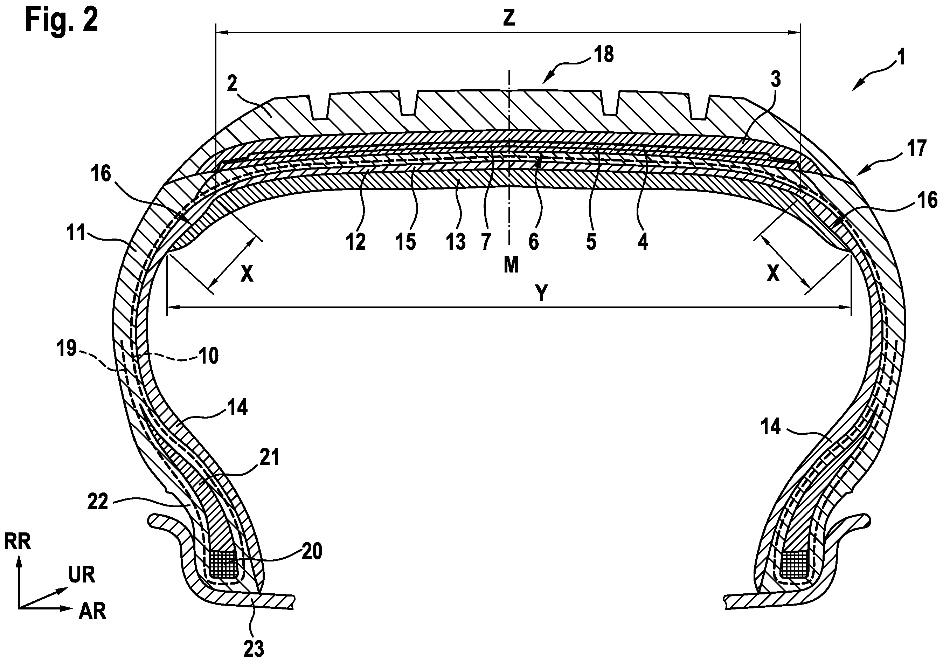

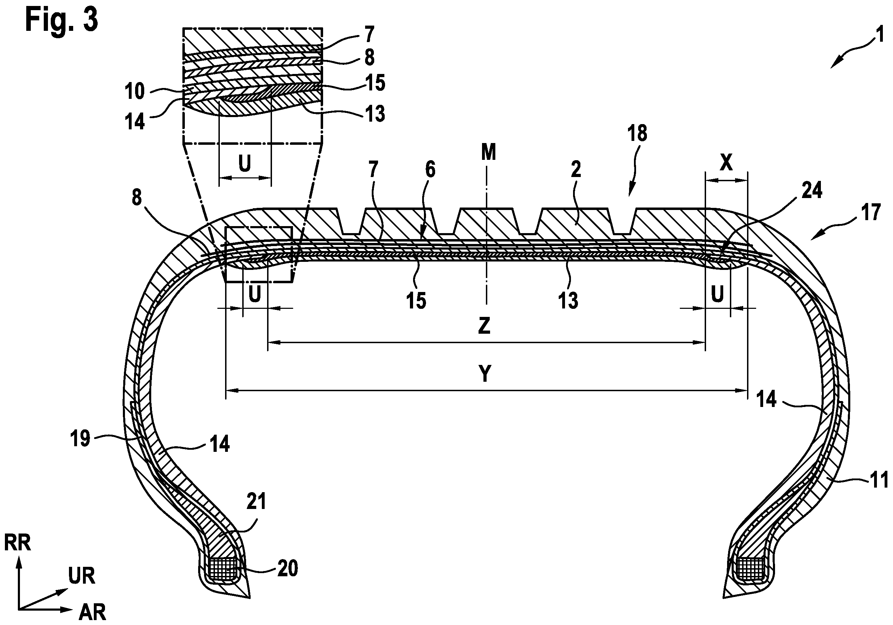

Die Figur 1 zeigt einen Teilquerschnitt quer zur Umfangsrichtung UR durch den Kopfbereich eines Fahrzeugluftreifens 1 mit selbstdichtenden Eigenschaften, Figur 2 sowie Figur 3 zeigen einen Querschnitt quer zur Umfangsrichtung UR durch einen Fahrzeugluftreifen 1 mit selbstdichtenden Eigenschaften, welcher als symmetrisch aufgebauter Radialreifen ausgeführt ist.

Nachfolgend werden die Gemeinsamkeiten dieses Fahrzeugluftreifens 1 mit s selbstdichtenden Eigenschaften für alle nachfolgenden Ausführungsbeispiele dargelegt. Auf die Unterschiede wird im Anschluss zu den jeweiligen Figuren eingegangen.

Der Fahrzeugluftreifen 1 mit selbstdichtenden Eigenschaften weist einen bevorzugt profilierten Laufstreifen 2 auf, darunterliegend befindet sich ein Festigkeitsträger aufweisender Gürtelverband 6. Der Gürtelverband 6 ist mehrlagig ausgeführt, insbesondere mindestens zweilagig. Der Gürtelverband 6 umfasst eine Bandage 4 sowie Gürtellagen 7, 8. Die Gürtellagen 7, 8 sind von einer Gürtelkantengummierung 9 geschützt. An den Gürtelverband 6 schließt sich mindestens eine Festigkeitsträger aufweisende Karkasse 10 an. Diese Karkasse 10 wird um einen Wulst 22 geführt und endet in einem Karkasshochschlag 19. Im Bereich des Wulstes 22 weist der Fahrzeugluftreifen 1 einen in Kautschuk eingebettete Festigkeitsträger, beispielsweise aus Stahldraht, aufweisenden Wulstkern 20 sowie ein sich daran anschließendes Wulstkernprofil 21 aus Elastomer-Material, beispielsweise gebildet aus Synthesekautschuk, auf. In axialer Richtung AR außen fügt sich im seitlichen Bereich an die Karkasse 10 eine Seitenwand 11 an. Die Seitenwand 11 wird aus Elastomer-Material hergestellt, beispielsweise aus Naturkautschuk. Der Laufstreifen 2 wird ebenfalls aus Elastomer-Material hergestellt, beispielsweise aus Synthese- und/oder Naturkautschuk. Der Gürtelverband 6 umfasst die Gürtellage 7, 8 sowie die Bandage 4.

Der Karkasshochschlag 19 gelangt mit seinem Ende in radialer Richtung RR in den Übergangsbereich zwischen dem Wulst 22 und der Seitenwand 11. Die Karkasse 10 kann einlagig oder mehrlagig, insbesondere zweilagig ausgeführt sein.

Der bevorzugt mehrlagige Gürtelverband 6, insbesondere dreilagige Gürtelverband 6 besteht zum einen aus Gürtellagen 7, 8 deren Festigkeitsträger aus Stahlkord in eine Gummimischung eingebettet sind, welche innerhalb jeder Lage parallel zueinander verlaufen, wobei die Stahlkorde der einen Lage in kreuzender Anordnung zu den Stahlkorden der zweiten Lage orientiert sind und mit der Umfangsrichtung UR des Fahrzeugluftreifens 1 jeweils einen Winkel zwischen 20 ° und 35 ° einschließen.

Zum anderen besteht der Gürtelverband 6 aus der in herkömmlicher und bekannter Weise ausgeführten Bandage 4. Diese Bandage 4 besteht aus in eine Gummimischung eigebetteten Festigkeitsträger. Die Festigkeitsträger werden beispielsweise aus Polyester, Polyamid (PA), aromatisches Polyamid (Aramid) oder einem Hybrid-Material aus den vorgenannten Materialien gebildet.

Auch die Karkasse 10 kann in herkömmlicher und bekannter Weise ausgeführt sein und somit in eine Gummimischung eingebettete, in radialer Richtung RR verlaufende Verstärkungsfäden aus einem textilen Material aufweisen. Die Karkasse 10 kann beispielsweise aus gummiertem Polyamid (PA), Rayon, Polyester oder einem gummierten Hybrid-Material aus den vorgenannten Materialien bestehen. Die Karkassfäden des als Radialreifen ausgeführten Fahrzeugluftreifens 1 mit selbstdichtenden Eigenschaften verlaufen quer, bevorzugt in einem Winkel von 90 ° zu einer Mittelinie M welche den Zenit des Fahrzeugluftreifens 1 bildet. Beim als Radialreifen ausgeführten Fahrzeugluftreifen 1 liegen die Kordfäden der Karkasse 10 im Winkel von 90 Grad zur Laufrichtung, also in der Seitenansicht "radial" und somit im rechten Winkel zur Umfangsrichtung UR. Darüber sind mehrere Gürtellagen 7, 8 stabilisierend eingebettet, welche selbst keine direkte Anbindung zu dem Wulst 22 haben. Die Karkasse 10 ist um den Wulstkern 20 von axial innen nach axial außen geführt, der Karkasshochschlag 19 verläuft neben den Wulstkernprofil 21 in radialer Richtung RR in Richtung Gürtelverband 6.

Die Selbstdichtung des Fahrzeugluftreifens 1 mit selbstdichtenden Eigenschaften ist durch eine nach der Vulkanisation des Fahrzeugluftreifens 1 nachträglich radial innen umlaufend aufgebrachte Dichtmittellage 13 erhalten. Die Dichtmittellage 13 weist in etwa die Breite des Gürtelverbands 6 auf und ist in etwa in dessen Projektion angeordnet. Jedoch weist die Innenschicht 12 in ihrer Erstreckung unterschiedliche Dicken auf. So dass radial oberhalb der Dichtmittellage 13 um den Reifenumfang umlaufend die Dicke des mittleren Teils, dünner Bereich 15, der Innenschicht 12 eine andere ist, als die Dicke der seitlich angeordneten Teile, dicker Bereich 14, der Innenschicht 12 .

Die der dicken Innenschicht 14 zugewandten Kanten der Dichtmittelage 13 sind mit den äußeren Teilen der dicken Innenschicht 14 überlappend angeordnet, wobei die Kanten der Dichtmittellage 13 die dickere Innenschicht 14 bereichsweise überdecken. Die Breite der Überlappung 16 des Teils der Dichtmittellage 13 mit der dickeren Innenschicht 14, wird in axialer Richtung AR gemessen und ist mit X eingezeichnet. Die Dichtmittellage 13 ist in axialer Richtung 4 bis 60 mm breiter als der mittlere Teil der Innenschicht 12, gebildet aus der dünneren Innenschicht 15. Sie überdeckt dabei den mittleren Teil der Innenschicht 12 an beiden Seiten um 2 bis 30 mm, vorzugsweise 7 bis 13 mm.

Mit Y ist eine Breite der Dichtmittellage 13 in den Figuren eingezeichnet. Mit Z ist die Breite der dünnen Innenschicht 15 in den Figuren eingezeichnet.

Nachfolgend wird auf die einzelnen die Ausführungsbeispiele bildenden Abweichungen beziehungsweise Ergänzungen zu der allgemeinen Beschreibung der Gemeinsamkeiten der Ausführungsbeispiele eingegangen.

Die Fig. 1 zeigt einen Teilquerschnitt durch den Kopfbereich 18 eines Fahrzeugluftreifen 1. Dieser Fahrzeugluftreifen 1 weist einen zweilagigen Gürtelverband 6 auf, bestehend aus einer äußeren Gürtellage 7 und einer inneren Gürtellage 8. Zwischen Gürtelverband 6 und Bandage 4 befindet sich eine Zwischenlage 5. Im Schulterbereich 17 des Fahrzeugluftreifens 1 ist eine Gürtelkantengummierung 9 angeordnet. In radialer Richtung RR schließt sich an den Gürtelverband 6 eine Karkasse 10 an. Die Karkasse 10 steht in axialer Richtung AR, von innen nach außen gesehen, mit einer Seitenwand 11 in Kontakt. In axialer Richtung AR sowie radialer Richtung RR, schließt sich von außen nach innen eine Innenschicht 12 an. In einem Kopfbereich 18 des Fahrzeugluftreifens 1 weist diese Innenschicht 12 einen dünnen Bereich 15 im Schulterbereich 17 einen dicken Bereich 14 auf. Im Kopfbereich 18 des Fahrzeugluftreifens 1 ist bevorzugt über die gesamte Breite des Laufstreifens 2 im Inneren des Fahrzeugluftreifens 1 eine Dichtmittellage 13 angeordnet. Im Schulterbereich 17 des Fahrzeugluftreifens 1 besteht eine Überlappung 16 zwischen der Dichtmittellage 13 und dem dicken Bereich der Innenschicht 12. Die Breite der Überlappung 16 ist mit X gekennzeichnet. Die Innenschicht 12 ist in diesem Ausführungsbeispiel einteilig ausgeführt.

Die beiden Gürtellagen 7, 8 des Gürtelverbands 6 bestehen aus in eine Gummimischung eingebetteten Festigkeitsträgern aus Stahlcord, welche innerhalb jeder Lage parallel zueinander verlaufen, wobei die Stahlcorde der ersten, äußeren Gürtellage 7 in kreuzender Anordnung zu den Stahlcorden der zweiten inneren Gürtellage 8 orientiert sind und mit der Reifenumfangsrichtung UR jeweils einen Winkel zwischen 15° und 45° einschließen.

Die Figur 2 zeigt einen Querschnitt quer zur Laufrichtung und damit auch quer zur Umfangsrichtung UR durch ein weiteres Ausführungsbeispiel eines Fahrzeugluftreifens 1 mit selbstdichtenden Eigenschaften. In der Fig. 2 ist ein Felgenhorn 23 abgebildet, welches sich an den Wulst 22 des Fahrzeugluftreifens 1 anschließt.

Die Fig. 3 zeigt einen Querschnitt quer zur Laufrichtung und damit auch quer zur Umfangsrichtung UR durch ein weiteres Ausführungsbeispiel eines Fahrzeugluftreifens 1 mit selbstdichtenden Eigenschaften. In diesem Ausführungsbeispiel ist die Innenschicht 12 dreiteilig ausgebildet. Die drei Teile der Innenschicht 12 werden aus zwei seitlich in den Reifenflanken angeordneten dicken Innenschichten 14 sowie einer im Kopfbereich 18 des Fahrzeugluftreifens 1 angeordneten dünnen Innenschicht 15 gebildet. Die beiden Kanten des Bereichs der dünnen Innenschicht 15 der Innenschicht 12 sind mit den seitlichen Teilen des Bereichs der dicken Innenschicht 14 der Innenschicht 12 überlappend angeordnet, wobei eine Überdeckung 24 des Bereichs der dünnen Innenschicht 15 der Innenschicht 12 mit den seitlich angeordneten Teilen des Bereichs der dicken Innenschicht 14 radial oberhalb oder unterhalb erfolgt. Die Breite der Überdeckung 24 ist mit U in den Figuren eingezeichnet.

Die beiden Gürtellagen 7, 8 des Gürtelverbands 6 bestehen aus in eine Gummimischung eingebetteten Festigkeitsträgern aus Stahlcord, welche innerhalb jeder Lage parallel zueinander verlaufen, wobei die Stahlcorde der ersten, äußeren Gürtellage 7 in kreuzender Anordnung zu den Stahlcorden der zweiten inneren Gürtellage 8 orientiert sind und mit der Reifenumfangsrichtung UR jeweils einen Winkel zwischen 15° und 45° einschließen.

### BEZUGSZEICHENLISTE

- 1: Fahrzeugluftreifen
- 2: Laufstreifen
- 3: Unterplatte
- 4: Bandage
- 5: Zwischenlage
- 6: Gürtelverband
- 7: Äußere Gürtellage
- 8: Innere Gürtellage
- 9: Gürtelkantengummierung
- 10: Karkasse
- 11: Seitenwand
- 12: Innenschicht
- 13: Dichtmittellage
- 14: Dicke Innenschicht
- 15: Dünne Innenschicht
- 16: Überlappung
- 17: Schulterbereich
- 18: Kopfbereich
- 19: Karkasshochschlag
- 20: Wulstkern
- 21: Wulstkernprofil
- 22: Wulst
- 23: Felgenhorn
- 24: Überdeckung

- M: Mittelinie / Zenith / Spiegelachse
- AR: axiale Richtung
- RR: radiale Richtung
- UR: Umfangsrichtung / Drehrichtung / Reifenumfangsrichtung
- U: Breite der Überdeckung 24 [mm]
- X: Breite der Überlappung 16 [mm]
- Y: Breite der Dichtmittellage 13 [mm]
- Z: Breite der dünnen Innenschicht 15 [mm]

## Patentansprüche

1. Fahrzeugluftreifen (1) mit selbstdichtenden Eigenschaften, umfassend einen bevorzugt profilierten Laufstreifen (2), einen mehrlagigen Gürtelverband (6) mit Gürtelkanten aufweisenden Gürtellagen (7, 8), eine Karkasse (10), welche in dem Bereich eines Wulstes (22) um einen Wulstkern (20) und ein Wulstkernprofil (21) zu einem Karkasshochschlag (19) herumgeführt ist und Seitenwände (11) sowie eine Innenschicht (12) und eine radial innerhalb der Innenschicht (12) angeordnete Dichtmittellage (13), wobei die Innenschicht (12) konturiert ausgeführt ist und zumindest in einem Teilbereich der Dichtmittellage (13) einen dünnen Bereich (15) mit geringerer Stärke als in außerhalb der Dichtmittellage (13) liegenden dickeren Bereichen (14) aufweist,
**dadurch gekennzeichnet,**
**dass** die konturierte Innenschicht (12) einteilig ausgebildet ist und sich im gesamten Innenraum des Fahrzeugluftreifens (1) erstreckt, wobei die dickeren Bereiche (14) der Innenschicht (12), im Reifenquerschnitt betrachtet, axial außerhalb der Gürtelkanten von der Dichtmittellage (13) überlappt sind.

2. Fahrzeugluftreifen (1) nach Patentanspruch 1, **dadurch gekennzeichnet, dass** die Innenschicht (12) in axialer Richtung (AR) innen zumindest innerhalb der Erstreckung des Wulstes (22) sowie der Seitenwand (11) in radialer Richtung (RR) einen Bereich einer dicken Innenschicht (14) aufweist.

3. Fahrzeugluftreifen (1) nach einem der vorhergehenden Patentansprüche, **dadurch gekennzeichnet, dass** die Innenschicht (12) zumindest im Erstreckungsbereich der dicken Innenschicht (14) luftdicht ausgeführt ist.

4. Fahrzeugluftreifen (1) nach einem der vorhergehenden Patentansprüche, **dadurch gekennzeichnet, dass** nach der Vulkanisation des Fahrzeugluftreifens (1) in radialer Richtung (RR) innen die Dichtmittellage (13) aufgebracht wird, wobei die Dichtmittellage (13) in etwa die Breite des Gürtelverbands (6) aufweist und in etwa in dessen Projektion angeordnet ist.

5. Fahrzeugluftreifen (1) nach einem der vorhergehenden Patentansprüche, **dadurch gekennzeichnet, dass** das die im Reifen in axialer Richtung (AR) gegenüberliegend angeordneten und radial umlaufenden dicken Innenschichten (14) nur im in radialer Richtung (RR) oberen Bereich eine Überlappung (16) mit der Dichtmittellage (13) aufweisen.

6. Fahrzeugluftreifen (1) nach Patentanspruch 5, **dadurch gekennzeichnet, dass** die Überlappung (16) zwischen der dicken Innenschicht (14) und der Dichtmittellage (13) ein Maß (X) von bis zu 60 mm, bevorzugt zwischen 2 und 30 mm, besonders bevorzugt zwischen 7 und 13 mm aufweist.

7. Fahrzeugluftreifen (1) nach einem der Patentansprüche 1 bis 6, **dadurch gekennzeichnet, dass** der Bereich der dicken Innenschicht (14) in seinen physikalischen und/oder chemischen Eigenschaften von dem Bereich der dünnen Innenschicht (15) der Innenschicht (12) abweicht.

8. Fahrzeugluftreifen (1) nach einem der Patentansprüche 1 bis 7, **dadurch gekennzeichnet, dass** alleinig der Bereich der dicken Innenschicht (14) der Innenschicht (12) von einer Kautschuk-Zusammensetzung gebildet ist, welche mindestens Polybutadien-Kautschuk (BR-Kautschuk), Butyl-Kautschuk und/oder Halobutyl-Kautschuk aufweist.

9. Fahrzeugluftreifen (1) nach einem der Patentansprüche 1 bis 8, **dadurch gekennzeichnet, dass** alleinig der Bereich der dünnen Innenschicht (15) der Innenschicht (12) von einer Folie gebildet ist.

10. Fahrzeugluftreifen (1) nach einem der Patentansprüche 1 bis 9, **dadurch gekennzeichnet, dass** der Bereich der dünnen Innenschicht (15) eine geringere Dichte aufweist als der Bereich der dicken Innenschicht (14) der Innenschicht (12).

11. Fahrzeugluftreifen (1) nach einem der Patentansprüche 1 bis 10, **dadurch gekennzeichnet, dass** die beiden Kanten des Bereichs der dünnen Innenschicht (15) der Innenschicht (12) mit den seitlichen Teilen des Bereichs der dicken Innenschicht (14) der Innenschicht (12) überlappend angeordnet sind, wobei die Überdeckung (24) des Bereichs der dünnen Innenschicht (15) der Innenschicht (12) mit den seitlich angeordneten Teilen des Bereichs der dicken Innenschicht (14) radial oberhalb oder unterhalb erfolgt.

## Claims

1. Pneumatic vehicle tyre (1) with self-sealing properties, comprising a preferably profiled tread (2), a multiply breaker belt assembly (6) with belt plies (7, 8) having belt edges, a carcass (10), which in the region of a bead (22) is led around a bead core (20) and a bead filler (21) to form a carcass turn-up (19), sidewalls (11) and also an inner layer (12) and a sealant layer (13), arranged radially inside the inner layer (12), wherein the inner layer (12) is of a contoured design and has at least in a partial region of the sealant layer (13) a thin region (15) of less thickness than in thicker regions (14) lying outside the sealant layer (13),
**characterized in that** the contoured inner layer (12) is formed as one part and extends in the entire interior space of the pneumatic vehicle tyre (1), wherein the thicker regions (14) of the inner layer (12), seen in the cross section of the tyre, are overlapped by the sealant layer (13) axially outside the belt edges.

2. Pneumatic vehicle tyre (1) according to Patent Claim 1, **characterized in that** the inner layer (12) has on the inside in the axial direction (AR), at least within the extent of the bead (22) and also the sidewall (11), in the radial direction (RR) a region of a thick inner layer (14) .

3. Pneumatic vehicle tyre according to one of the preceding patent claims, **characterized in that** the inner layer (12) is designed as airtight, at least in the region of extent of the thick inner layer (14).

4. Pneumatic vehicle tyre (1) according to one of the preceding patent claims, **characterized in that** the sealant layer (13) is applied inside in the radial direction (RR) after the vulcanization of the pneumatic vehicle tyre (1), wherein the sealant layer (13) has approximately the width of the breaker belt assembly (6) and is arranged approximately in the projection thereof.

5. Pneumatic vehicle tyre (1) according to one of the preceding patent claims, **characterized in that** the thick inner layers (14), arranged in the tyre oppositely in the axial direction (AR) and running around radially, only have an overlap (16) with the sealant layer (13) in the upper region in the radial direction (RR).

6. Pneumatic vehicle tyre (1) according to Patent Claim 5, **characterized in that** the overlap (16) between the thick inner layer (14) and the sealant layer (13) has a dimension (X) of up to 60 mm, preferably between 2 and 30 mm, particularly preferably between 7 and 13 mm.

7. Pneumatic vehicle tyre (1) according to one of Patent Claims 1 to 6, **characterized in that** the region of the thick inner layer (14) deviates in its physical and/or chemical properties from the region of the thin inner layer (15) of the inner layer (12).

8. Pneumatic vehicle tyre (1) according to one of Patent Claims 1 to 7, **characterized in that** only the region of the thick inner layer (14) of the inner layer (12) is formed by a rubber composition which comprises at least polybutadiene rubber (BR rubber), butyl rubber and/or halobutyl rubber.

9. Pneumatic vehicle tyre (1) according to one of Patent Claims 1 to 8, **characterized in that** only the region of the thin inner layer (15) of the inner layer (12) is formed by a film.

10. Pneumatic vehicle tyre (1) according to one of Patent Claims 1 to 9, **characterized in that** the region of the thin inner layer (15) has a lower density than the region of the thick inner layer (14) of the inner layer (12) .

11. Pneumatic vehicle tyre (1) according to one of Patent Claims 1 to 10, **characterized in that** the two edges of the region of the thin inner layer (15) of the inner layer (12) are arranged overlapping with the lateral parts of the region of the thick inner layer (14) of the inner layer (12), wherein the overlap (24) of the region of the thin inner layer (15) of the inner layer (12) with the laterally arranged parts of the region of the thick inner layer (14) takes place radially above or below.

## Revendications

1. Pneu de véhicule (1) présentant des propriétés d'auto-étanchéité, comprenant une bande de roulement de préférence profilée (2), un assemblage de ceinture multicouche (6) avec des couches de ceinture (7, 8) comprenant des bords de ceinture, une carcasse (10), qui est enroulée dans la zone d'un bourrelet (22) autour d'une tringle (20) et d'un profilé de tringle (21) en un col de carcasse (19), et des parois latérales (11), ainsi qu'une couche intérieure (12) et une couche d'agent d'étanchéité (13) agencée radialement à l'intérieur de la couche intérieure (12), la couche intérieure (12) étant configurée sous forme profilée et comprenant au moins dans une zone partielle de la couche d'agent d'étanchéité (13) une zone mince (15) ayant une épaisseur plus faible que dans des zones plus épaisses (14) situées à l'extérieur de la couche d'agent d'étanchéité (13),
**caractérisé en ce que**
la couche intérieure profilée (12) est configurée d'un seul tenant et s'étend dans l'ensemble de la chambre intérieure du pneu de véhicule (1), les zones plus épaisses (14) de la couche intérieure (12), dans la section transversale de pneu, étant chevauchées axialement à l'extérieur des bords de ceinture par la couche d'agent d'étanchéité (13).

2. Pneu de véhicule (1) selon la revendication 1, **caractérisé en ce que** la couche intérieure (12) comprend, à l'intérieur dans la direction axiale (AR) au moins à l'intérieur de l'extension du bourrelet (22), ainsi que de la paroi latérale (11) dans la direction radiale (RR), une zone d'une couche intérieure épaisse (14).

3. Pneu de véhicule (1) selon l'une quelconque des revendications précédentes, **caractérisé en ce que** la couche intérieure (12) est configurée sous forme étanche à l'air au moins dans la zone d'extension de la couche intérieure épaisse (14).

4. Pneu de véhicule (1) selon l'une quelconque des revendications précédentes, **caractérisé en ce qu'après** la vulcanisation du pneu de véhicule (1), la couche d'agent d'étanchéité (13) est appliquée à l'intérieur dans la direction radiale (RR), la couche d'agent d'étanchéité (13) présentant approximativement la largeur de l'assemblage de ceinture (6) et étant agencée approximativement dans sa projection.

5. Pneu de véhicule (1) selon l'une quelconque des revendications précédentes, **caractérisé en ce que** les couches intérieures épaisses (14) agencées à l'opposé dans la direction axiale (AR) dans le pneu et radialement périphériques présentent uniquement dans la zone supérieure dans la direction radiale (RR) un chevauchement (16) avec la couche d'agent d'étanchéité (13) .

6. Pneu de véhicule (1) selon la revendication 5, **caractérisé en ce que** le chevauchement (16) entre la couche intérieure épaisse (14) et la couche d'agent d'étanchéité (13) présente une mesure (X) de jusqu'à 60 mm, de préférence comprise entre 2 et 30 mm, de manière particulièrement préférée comprise entre 7 et 13 mm.

7. Pneu de véhicule (1) selon l'une quelconque des revendications 1 à 6, **caractérisé en ce que** la zone de la couche intérieure épaisse (14) diffère au niveau de ses propriétés physiques et/ou chimiques de la zone de la couche intérieure mince (15) de la couche intérieure (12) .

8. Pneu de véhicule (1) selon l'une quelconque des revendications 1 à 7, **caractérisé en ce que** seule la zone de la couche intérieure épaisse (14) de la couche intérieure (12) est formée par une composition de caoutchouc, qui comprend au moins du caoutchouc de polybutadiène (caoutchouc BR), du caoutchouc de butyle et/ou du caoutchouc d'halobutyle.

9. Pneu de véhicule (1) selon l'une quelconque des revendications 1 à 8, **caractérisé en ce que** seule la zone de la couche intérieure mince (15) de la couche intérieure (12) est formée par un film.

10. Pneu de véhicule (1) selon l'une quelconque des revendications 1 à 9, **caractérisé en ce que** la zone de la couche intérieure mince (15) présente une densité plus faible que la zone de la couche intérieure épaisse (14) de la couche intérieure (12).

11. Pneu de véhicule (1) selon l'une quelconque des revendications 1 à 10, **caractérisé en ce que** les deux bords de la zone de la couche intérieure mince (15) de la couche intérieure (12) sont agencés en chevauchement avec les parties latérales de la zone de la couche intérieure épaisse (14) de la couche intérieure (12), le recouvrement (24) de la zone de la couche intérieure mince (15) de la couche intérieure (12) avec les parties agencées latéralement de la zone de la couche intérieure épaisse (14) ayant lieu radialement au-dessus ou en dessous.
